Europäisches Patentamt

European Patent Office

Office européen des brevets

(19)

(11) Veröffentlichungsnummer: **0 042 578**
B1

(12) **EUROPÄISCHE PATENTSCHRIFT**

(45) Veröffentlichungstag der Patentschrift:
19.09.84

(21) Anmeldenummer: 81104636.6

(22) Anmeldetag: 16.06.81

(51) Int. Cl.³: **F 16 K 1/22,** F 16 K 11/16

(54) **Zweiklappensteuerventil.**

(30) Priorität: 23.06.80 DE 3023380

(43) Veröffentlichungstag der Anmeldung:
30.12.81 Patentblatt 81/52

(45) Bekanntmachung des Hinweises auf die Patenterteilung:
19.09.84 Patentblatt 84/38

(84) Benannte Vertragsstaaten:
AT CH DE FR GB LI NL SE

(56) Entgegenhaltungen:
DE - A - 2 116 709
US - A - 3 331 394
US - A - 3 417 961

(73) Patentinhaber: Martin Lohse GmbH, Unteres Paradies 42, D-7920 Heidenheim 8 (DE)

(72) Erfinder: Warnke, Klaus, Wildstrasse 7,
D-7920 Heidenheim (DE)
Erfinder: Grässer, Dietrich, Knupfertal-Strasse 9,
D-7920 Heidenheim (DE)

(74) Vertreter: Petzold, Martin, Wilhelm Ködel Strasse 18,
D-8882 Lauingen (DE)

## Beschreibung

Die Erfindung bezieht sich auf ein Zweiklappensteuerventil gemäß dem Oberbegriff des Anspruchs 1, bekannt aus z. B. US-A-3 417 961.

Ein Mehrklappensteuerventil ist auch aus der US-A-3 331 394 bekannt. Dieses Steuerventil weist drei Rohrleitungsanschlüsse auf. Jeweils zwischen zwei Rohrleitungsanschlüssen ist eine Absperrklappe gelagert, wobei immer zwei mit ihren achsfreien Enden dichtend aneinanderliegen, während die dritte Absperrklappe an der Wandung eines Rohrleitungsanschlusses anliegt. Die drei erforderlichen Absperrklappen verursachen nicht nur einen relativ großen konstruktiven Aufwand, sondern behindern auch den Durchfluß des durchströmenden Mediums erheblich. Dies nicht nur, weil die jeweils unwirksame Absperrklappe voll im Strömungsquerschnitt liegt, sondern auch deshalb, weil die Achsen ebenfalls den Strömungsquerschnitt verringern. Diese Behinderung macht sich insbesondere bei flüssigen Medien erheblich bemerkbar.

Der Erfindung liegt daher die Aufgabe zu Grunde, ein Zweiklappensteuerventil der bekannten Art so zu gestalten, daß es äußerst wirtschaftlich in der Herstellung ist, vier Rohrleitungsanschlüsse ermöglicht, also ein 4/2-Wegeventil geschaffen wird, und keine Behinderung der Strömung bzw. keine Verengung des Strömungsquerschnittes stattfindet.

Diese Aufgabe wird erfindungsgemäß dadurch gelöst, daß vier Rohrleitungsanschlüsse jeweils um 90 Grad gegeneinander versetzt angeordnet sind, daß die beiden Schwenkachsen jeweils zwischen zwei Rohrleitungsanschlüssen einander diagonal gegenüberliegend angeordnet sind, und daß in die einander diagonal gegenüberliegenden schwenkachsfreien Bereiche zwischen zwei Rohrleitungsanschlüssen jeweils eine Dichtleiste als Sitz für ein Absperrklappenende angeordnet ist.

Durch diese Ausgestaltung wird auch erreicht, daß durch die im System herrschende Strömung ein Druckausgleich zustandekommt, wodurch sich das Zweiklappensteuerventil bereits bei geringem Kraftaufwand betätigen läßt.

Vorteilhafte Ausgestaltungen des Zweiklappensteuerventils der Erfindung sind in den Unteransprüchen angegeben.

Die Erfindung wird anhand der Zeichnung näher erläutert, ohne jedoch auf die dargestellte Ausführung begrenzt zu sein. Es zeigt

Fig. 1 ein Zweiklappensteuerventil im senkrechten Längsschnitt,

Fig. 2 ein Zweiklappensteuerventil entsprechend der Fig. 1 in Vorderansicht und

Fig. 3 ein Zweiklappensteuerventil entsprechend der Fig. 1, jedoch mit einem aus Zahnsegmenten und Antriebszahnrad bestehenden Verstellmechanismus.

Das Zweiklappensteuerventil umfaßt als Gehäuse ein Rohrstück 1 aus nicht rostendem Stahl, dessen Enden mit je einer Verschlußplatte 2, 2' verschlossen sind. Am Mantel des Gehäuses 1 sind gleichmäßig über dem Umfang verteilt vier rechteckige Durchbrechungen vorgesehen, in welche jeweils ein an seiner Basis ebenfalls rechteckig ausgebildeter Rohranschlußstutzen 3 angesetzt ist. Der Rohranschlußstutzen 3 geht von seinem rechteckigen Bereich nach außen in einen kreisförmigen Querschnitt über und endet mit einem Anschlußflansch 4.

In den Bereichen zwischen jeweils zwei Rohranschlußstutzen 3 sind innerhalb des rohrförmigen Gehäuses 1 Leisten 5, 5' aus elastischem Material, vorzugsweise Gummi, eingesetzt.

Die Leisten 5, 5' verlaufen von der einen Verschlußplatte 2 des Gehäuses 1 in dessen axialer Richtung bis zur anderen Verschlußplatte 2'. Jede der Leisten 5, 5' weist dabei zwei in ihre Längsrichtung verlaufende Durchgangsbohrungen auf, durch welche sich Schrauben 6 erstrecken, mit denen die beiden Verschlußplatten 2, 2' und das rohrförmige Gehäuse 1 abgedichtet, d. h. vorzugsweise unter Zwischenschaltung von Dichtelementen, miteinander verspannt sind.

Zwei der im Querschnitt im wesentlichen dreieckförmigen Leisten 5', welche sich einander diametral gegenüber liegen, weisen jeweils eine Lagerbohrung auf, in welcher eine Schwenkachse 7 für eine Absperrklappe 8 drehbar gelagert ist. Die Lagerbohrung und damit die Schwenkachsen 7 erstrecken sich in axialer Richtung des Gehäuses 1 bzw. der Leisten 5'. Die Absperrklappen 8 sind an den Schwenkachsen 7 angeschweißt und zwar derart, daß die Verlängerung der jeweils innen liegenden Fläche der Absperrklappe 8 sich durch die Mittelachse der Verstellwelle-Schwenkachse 7 erstreckt.

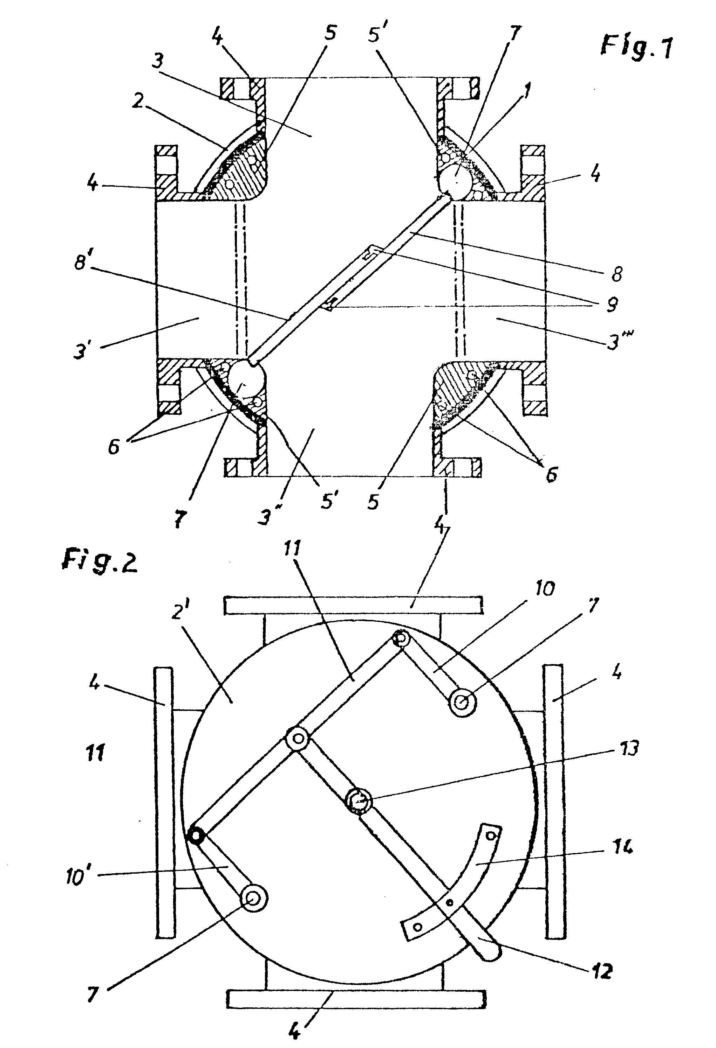

In der in Fig. 1 gezeigten Stellung liegen aufgrund der vorherbeschriebenen Versetzung der Absperrklappen 8 diese mit ihren den Schwenkachsen 7 abgewandten Enden flächig bündig aneinander. Im äußersten Bereich dieser beiden Enden weist jede Absperrklappe 8 ein eingesetztes, im wesentlichen im Querschnitt T-förmiges Dichtungselement 9 auf. In der dargestellten Lage liegt jeweils ein Schenkel des Dichtungselementes 9 der einen Absperrklappe 8 an der anderen Absperrklappe 8' dichtend an. Die Absperrklappen 8, 8' sind rechteckig ausgebildet und vermögen in der in Fig. 1 strichpunktiert dargestellten Stellung die zugeordneten Rohranschlußstutzen 3 bzw. deren Zulauf abgedichtet zu verschließen. Hierzu liegt jede Ventilleiste mit ihrem der Schwenkachse abgewandten Ende an der anderseits des zu verschließenden Rohranschlußstutzens 3 befindlichen und als Dichtleiste dienenden Leiste an. Mit ihren beiden Längsseiten, längs welchen sich vorzugsweise ebenfalls das vorgenannte Dichtelement erstreckt, liegt jede Absperrklappe 8, 8' in der strichpunktierten Stellung an anderen Dichtleisten an, welche sich zwischen den Leisten 5, 5 beiderseits der viereckigen Durchbrechungen im rohrförmigen Gehäuse 1 erstrecken.

In der in Fig. 1 in ausgezogenen Linien gezeigten Stellung der Absperrklappen 8, 8' können beispielsweise zwei unterschiedliche Stoffströme an den Rohranschlußstutzen 3 bzw. 3'' eintreten und bei den Rohranschlußstutzen 3' bzw. 3''' austreten, ohne daß sich die beiden Stoffströme in dem Zweiklappensteuerventil mischen.

In der strichpunktiert gezeichneten Stellung kann ein beispielsweise am Rohrstutzen 3 eintretender Stoffstrom zum Rohranschlußstutzen 3'' geleitet werden, während die beiden anderen Rohranschlußstutzen 3', 3''' mittels der beiden Absperrklappen 8, 8' abgedichtet sind.

Die Absperrklappen 8, 8' können, wie Fig. 2 zeigt, mittels eines Verstellmechanismus betätigt werden, welcher an jeder Schwenkachse 7 einen drehfest angesetzten Betätigungshebel 10 umfaßt. Beide Betätigungshebel 10, 10' sind mittels einer Koppel 11 gelenkig miteinander verbunden. Etwa mittig der Koppel 11 greift ein Handhebel 12 gelenkig an, welcher seinerseits an der Verschlußplatte 2' mittels eines Achszapfens 13 schwenkbar gelagert ist. Der Handhebel 12 ist mittels eines Rastsegmentes 14, welches ebenfalls an der Verschlußplatte 2' zwischen dem Achszapfen 13 und dem Griff des Handhebels 12 befestigt ist, zumindest in den beiden in Fig. 1 gezeigten Stellungen der Absperrklappen 8, 8' feststellbar.

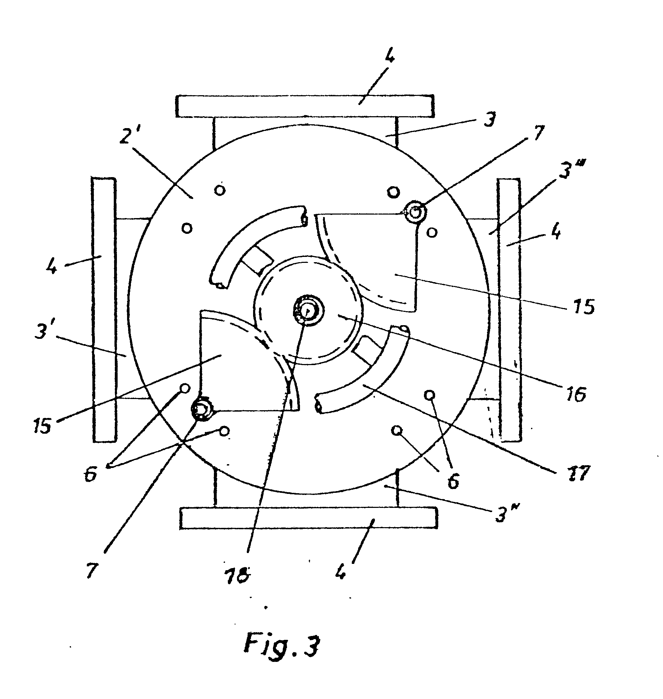

Gemäß Fig. 3 kann an den Schwenkachsen 7 auch ein Verstellmechanismus angreifen, welcher zwei Zahnsegmente 15 umfaßt, welche an den Schwenkachsen 7 drehfest befestigt sind. Beide Zahnsegmente 15 wirken mit einem an der Verschlußplatte 2' bzw. einer an dieser befestigten Lagerbrücke drehbar gelagerten Zahnrad 16 zusammen, welches mittels eines Handrades 17 gedreht werden kann.

Im Bedarfsfall kann anstatt der Handbetätigung auch ein motorischer Antrieb, sei er mechanisch, elektrisch oder hydraulisch bzw. pneumatisch, vorgesehen sein.

## Patentansprüche

1. Zweiklappensteuerventil für gasförmige und flüssige Medien in stoffführenden Rohrleitungen, mit zwei in Draufsicht rechteckigen Absperrklappen (8, 8'), die um außerhalb des Strömungsquerschnittes versetzt angeordnete Achsen (7) schwenkbar gelagert sind und die mit ihren von den Schwenkachsen abgewandten Klappenenden aneinander dichtend anlegbar sind, dadurch gekennzeichnet, daß vier Rohrleitungsanschlüsse (3) jeweils um 90 Grad gegeneinander versetzt angeordnet sind, daß die beiden Schwenkachsen (7) jeweils zwischen zwei Rohrleitungsanschlüssen (3) einander diagonal gegenüberliegend angeordnet sind, und daß in die einander diagonal gegenüberliegenden schwenkachsfreien Bereiche zwischen zwei Rohrleitungsanschlüssen (3) jeweils eine Dichtleiste (5) als Sitz für ein Absperrklappenende angeordnet ist.

2. Zweiklappensteuerventil nach Anspruch 1, dadurch gekennzeichnet, daß die Dichtleiste (5) aus Kunststoff, bevorzugt Gummi, ausgebildet ist und daß jede Absperrklappe (8, 8') am Außenrand eine Gegendichtleiste (9) trägt, welche sich auf der innenliegenden Seite bis in die Ebene der Absperrklappe (8, 8') erstreckt.

3. Zweiklappensteuerventil nach Anspruch 2, dadurch gekennzeichnet, daß die Dichtleisten (5, 5') am Zweiklappensteuerventilgehäuse (1) dreieckförmig mit abgerundeter Innenkante ausgebildet sind.

4. Zweiklappensteuerventil nach Anspruch 1, dadurch gekennzeichnet, daß die Absperrklappen (8, 8') an ihren Schwenkachsen (7) angeschweißt sind.

5. Zweiklappensteuerventil nach Anspruch 1 oder 2, dadurch gekennzeichnet, daß jede Schwenkachse (7) der Absperrklappen (8, 8') einen Betätigungshebel (10, 10') aufweist und daß die beiden Betätigungshebel (10, 10') über eine Koppel (11) gelenkig miteinander verbunden sind.

6. Zweiklappensteuerventil nach Anspruch 5, dadurch gekennzeichnet, daß an der Koppel (11) ein Handhebel (12) befestigt ist.

7. Zweiklappensteuerventil nach Anspruch 6, dadurch gekennzeichnet, daß der Handhebel (12) an dem Zweiklappensteuerventilgehäuse (1) bzw. den Verschlußplatten (2, 2') schwenkbar gelagert ist und an der Koppel (11) gelenkig angreift.

8. Zweiklappensteuerventil nach Anspruch 6 oder 7, dadurch gekennzeichnet, daß der Handhebel (12) mit einem Rastsegment (14) zur Fixierung seiner momentanen Einstellung zusammenwirkt.

9. Zweiklappensteuerventil nach Anspruch 1 oder 2, dadurch gekennzeichnet, daß jede Schwenkachse (7) der Absperrklappen (8, 8') mit einer Verstellwelle getriebetechnisch gekoppelt ist.

10. Zweiklappensteuerventil nach Anspruch 9, dadurch gekennzeichnet, daß die Koppelung mittels jeweils eines an der Schwenkachse (7) starr befestigten Zahnsegmentes (15) erfolgt, welches mit einem Zahnrad (16) der Verstellwelle (18) zusammenarbeitet.

## Claims

1. Two flap control valve for gaseous and liquid media in substance-transporting pipes, with two rectangular locking flaps (8, 8') in top view, which are swivel-mounted around axes (7) arranged in reverse order and which with their flap ends turned away from the swivel axes can be arranged close to each other so that they have a sealing effect, characterized in that each one of the four pipe connections (3) are arranged in reverse order by 90 degrees, that each one of the two swivel axes (7) are arranged diagonally to each other between two pipe connections (3) and that in each one of the diagonally arranged areas without swivel axes between two pipe connections (3) a sealing band (5) is provided as location for a locking flap end.

2. Two flap control valve under claim 1, characterized in that the sealing band (5) is made of plastic, preferably rubber, and that each locking flap (8, 8') has a counter sealing band (9) at its outer edge, which on the inner side extends to the level of the locking flap (8, 8').

3. Two flap control valve under claim 2, characterized in that the sealing bands (5, 5) on the two flap control valve housing (1) are triangularly shaped and provided with a rounded inner edge.

4. Two flap control valve under claim 1, characterized in that the locking flaps (8, 8') are sealed to their swivel axes (7).

5. Two flap control valve under claim 1 or 2, characterized in that each swivel axis (7) of the locking flaps (8, 8') has an operating lever (10, 10') and that the two operating levers (10, 10') are flexibly connected via a coupling (11).

6. Two flap control valve under claim 5, characterized in that a hand lever (12) is fastened to the coupling (12).

7. Two flap control valve under claim 6, characterized in that the hand lever (12) is swivel-mounted to the two flap control valve housing (1) and the locking plates (2, 2'), respectively and acts flexibly on the coupling (11).

8. Two flap control valve under claim 6 or 7, characterized in that the hand lever (12) acts together with a notch segment (14) for fixing its present setting.

9. Two flap control valve under claim 1 or 2, characterized in that each swivel axis (7) of the locking flaps (8, 8') is coupled gear-technically with a control shaft.

10. Two flap control valve under claim 9, characterized in that the coupling is effected by a tooth segment, rigidly fixed to the swivel axis (7), which acts together with a gear (16) of the control shaft (18).

**Revendications**

1. Valve avec deux clapets et avec quatre jonctions pour des conduites pour des substances gazéiformes ou liquides dans des conduites menant les substances, avec deux clapets de barrage rectangulaire (8, 8') en vue d'en haut, qui sont étendus pivotamment autour des arbres (7) arrangés transféré et qui peuvent être adapté compact l'un à l'autre avec les bouts des clapets détournés des arbres pivotants, caractérisés en quatre jonctions pour des conduites (3) chaque fois arrangé l'un contre l'autre d'un angle de 90 degrés, en ces deux arbrés pivotants (7) arrangés vis-à-vis et diagonale et en secteurs indépendant des arbres pivotants placés diagonalement vis-à-vis entre deux jonctions pour des conduites (3), dans lesquels il y a chaque fois une tringle étanche (5) en place pour le bout d'un clapet de barrage.

2. Valve avec deux clapets et avec quatre jonctions pour des conduites correspondante à prétention 1, caractérisée en cette tringle étanche (5) en matière plastique, préféré caoutchouc qui est formée et en chaque clapet de barrage (8, 8') porte au bord extérieur une tringle étanche opposée (9), qui s'étend jusqu' à la pleine du clapet de barrage.

3. Valve avec deux clapets et avec quatre jonctions pour des conduites correspondante à prétention 2, caractérisée en ces tringles étanches (5, 5') en forme de triangel avec le bord intérieur arrondi, formées à la boîte de la valve.

4. Valve avec deux clapets et avec quatre jonctions pour des conduites correspondante à prétention 1, caractérisée par le fait que les clapets de barrage (8, 8') sont soudés à leurs arbres pivotants (7).

5. Valve avec deux clapets et avec quatre jonctions pour des conduites correspondante à prétention 1 ou 2, caractérisée par le fait que chaque arbre pivotant (7) des clapets de barrage (8, 8') montre un levier à actionner (10, 10') et que les deux leviers à actionner (10, 10') sont attachés flexiblement l'un à l'autre par une accuplement (11).

6. Valve avec deux clapets et avec quatre jonctions pour des conduites correspondante à prétention 5, caractérisée par le fait qu'un levier à main (12) est attaché à l'accuplement (11).

7. Valve avec deux clapets et avec quatre jonctions pour des conduites correspondante à prétention 6, caractérisée par le fait que le levier à main (12) à la boîte de la valve (1) ou aux plaques à clef (2, 2') est étandu pivotamment et qui prend flexiblement à l'accuplement (11).

8. Valve avec deux clapets et avec quatre jonctions pour des conduites correspondante à prétention 6 ou 7, caractérisée par le fait que le levier à main (12) coopère à une section qui reste (14) pour fixer son ajustement momentané.

9. Valve avec deux clapets et avec quatre jonctions pour des conduites correspondante à prétention 1 ou 2, caractérisée par le fait que chaque arbre pivotant des clapets de barrage (8, 8') est couplé engrenage-techniquement avec un arbre pour changer la position.

10. Valve avec deux clapets et avec quatre jonctions pour des conduites correspondante à prétention 9, caractérisée par le fait que l'accuplement s'ensuit chaque fois avec une section dentée (15) fixée immobilement au arbre pivotant (7), qui coopere à une roue dentée du arbre pour changer la position.

Fig.1

Fig.2

Fig. 3